# FASCICULE DE BREVET EUROPEEN

(11) **EP 1 774 441 B1**
(45) Date de publication et mention de la délivrance du brevet: **10.10.2007**
(21) Numéro de dépôt: 05787404.2
(22) Date de dépôt: 04.07.2005
(51) Int. Cl.: G06F 17/30

(54) **Procédé de traitement de données et logiciel associé**
Verfahren zur Datenverarbeitung und assoziiertes Softwareprogramm
Method for processing data and associated software program

(30) Priorité: 02.07.2004 FR 0407348
(43) Date de publication de la demande: 18.04.2007
(73) Titulaire: Isthma, 75020 Paris (FR)
(72) Inventeur: SUMMA, Mireille, F-77515 POMMEUSE (FR); VAUTRAIN, Frédérick, F-75008 PARIS (FR); BARRAULT, Mathieu, F-75019 PARIS (FR); ROSSI, Fabrice, F-75020 PARIS (FR)
(74) Mandataire: Laget, Jean-Loup
(86) Numéro de dépôt international: PCT/FR2005/050533
(87) Numéro de publication internationale: WO 2006/013307

(56) Documents cités:
- CA-A1- 2 329 904
- US-A- 5 933 818
- DIDAY E: "Symbolic Data Analysis - A Mathematical Framework and Tool for Data Mining" ELECTRONIC NOTES IN DISCRETE MATHEMATICS, NORTH-HOLLAND, vol. 2, avril 2000 (2000-04), pages 1-10, XP004803024 ISSN: 1571-0653
- STEPHAN V ED - WAGNER R R ET AL: "Extracting symbolic objects from relational databases" DATABASE AND EXPERT SYSTEMS APPLICATIONS, 1996. PROCEEDINGS., SEVENTH INTERNATIONAL WORKSHOP ON ZURICH, SWITZERLAND 9-10 SEPT. 1996, LOS ALAMITOS, CA, USA,IEEE COMPUT. SOC, US, 9 septembre 1996 (1996-09-09), pages 514-519, XP010200915 ISBN: 0-8186-7662-0

## Description

La présente invention est relative aux données complexes. Plus particulièrement, l'invention est relative à un procédé, mis en oeuvre par un logiciel, permettant la génération, la visualisation, l'édition de données complexes, ou plus généralement toute opération permettant de préparer des données complexes en vue d'une analyse complexe.

Dans le but de fixer le sens des termes utilisés dans ce document, le lexique suivant donne quelques définitions :
- **Table de données :** dans ce qui suit, une table de données est une représentation matricielle constituée de cellules aptes à contenir de l'information. Les cellules sont organisées en lignes et en colonnes. Chaque colonne est un attribut ou champ (Identifiant, Age, Sexe, Ville, etc.), et chaque ligne représente un individu ou unité statistique. Un individu est identifié de manière non équivoque par la valeur d'un identifiant qui peut éventuellement être un n-uplet. Cet identifiant peut être repris dans la table de données par un champ d'identification ou par plusieurs champs s'il s'agit d'un n-uplet.
- **Donnée monovaluée ou classique :** il s'agit d'une information ayant une seule valeur. Un entier (3), un réel (1,312), un caractère (A) ou l'équivalent, sont des exemples de données classiques ou monovaluées. De manière connue, une donnée monovaluée est consignée dans une cellule d'une table de données. Lorsqu'un champ est une variable prenant des valeurs monovaluées, on parlera de champ classique. De même, une table comportant uniquement des champs classiques sera dite table de données classiques.
- **Donnée multivaluée ou complexe :** il s'agit d'une donnée comme, par exemple, un ensemble de valeurs, un intervalle, une distribution, une courbe ou l'équivalent. Une donnée complexe est également consignée dans une unique cellule d'une table. Par exemple, un intervalle est une donnée complexe mémorisée dans une cellule. Cette cellule contient l'équivalent de quatre valeurs à savoir la valeur de la borne inférieure de l'intervalle, la valeur de la borne supérieure, une information permettant de savoir si la borne inférieure est contenue ou exclue de l'intervalle et une information permettant de savoir si la borne supérieure est contenue ou exclue de l'intervalle. Les données complexes sont par exemple codées dans une cellule par une chaîne de caractères. Lorsqu'un champ est une variable prenant des valeurs multivaluées, on parlera de champ complexe. Une table comportant au moins un champ complexe sera dite table de données complexes.
- **Agrégation** : il s'agit d'une opération de regroupement des valeurs monovaluées de différentes cellules de manière à construire une grandeur elle-même monovaluée. Par exemple, effectuer le calcul d'une moyenne ou d'une variance sur les valeurs d'un champ d'un lot d'individus est une opération d'agrégation.
- **Synthèse** : il s'agit d'une opération de regroupement des valeurs monovaluées d'un lot de cellules pour construire une valeur multivaluée. Par exemple, réunir les valeurs monovaluées dudit lot dans une donnée complexe du type intervalle contenant l'ensemble de ces valeurs.

Des travaux théoriques récents ont montré les multiples avantages qui pouvaient être tirés de l'utilisation de valeurs complexes en analyse de données, et, plus particulièrement, pour le traitement des bases de données volumineuses comportant un grand nombre de données monovaluées regroupées dans un grand nombre de tables. Ces avantages sont d'autant plus importants que les bases analysées sont hétérogènes au sens où les données qu'elles comportent proviennent de sources différentes et/ou possèdent des formats différents.

D'une manière simplifiée, les données complexes permettent de résumer de grandes quantités de données monovaluées tout en conservant un niveau d'information plus élevé que les données monovaluées obtenue par simple agrégation. Les données complexes se caractérisent par une description plus riche des données initiales que les données monovaluées agrégées. En conséquence, les données complexes autorisent des analyses plus fines. Mais ces analyses sont d'un type foncièrement nouveau du fait, entre autre, de la variété des opérateurs complexes utilisables. Pour ce faire, de nouveaux algorithmes spécifiques à l'analyse de données complexes ont été développés.

Il y a donc un besoin pour un outil de production de données complexes à partir du contenu des bases de données relationnelles actuelles contenant des données classiques monovaluées hétérogènes afin de permettre ensuite des analyses fines utilisant ces nouveaux algorithmes de traitement de données complexes.

Dans le brevet des Etats-Unis d'Amérique 2004/0034615 appartenant à Business Objects S.A., une méthode est décrite permettant la navigation parmi des niveaux de hiérarchie ayant chacun un niveau de granularité ou de précision différent. Sur une base de données relationnelle, l'administrateur construit des tables de données supplémentaires en exécutant, à l'avance, les requêtes les plus souvent demandées par les utilisateurs. Par exemple, s'il existe dans la base de données une première table PRODUITS reliant le type de pièce à son prix, et une deuxième table FACTURE reliant un client à un type de pièce et à un nombre de pièces, l'administrateur effectue une requête conduisant à la création d'une nouvelle table CA donnant le chiffre d'affaires par client sur l'année. Il s'agit ici d'une opération d'agrégation de l'information conduisant à une valeur monovaluée. Par la suite, lorsqu'un utilisateur de la base cherche à connaître le chiffre d'affaires par client, il émet une requête sur la table CA. L'information n'a pas à être calculée de nouveau puisqu'elle est présente dans la base. En conséquence, la réponse s'affiche rapidement sur l'écran de l'utilisateur de préférence sous la forme d'un tableau. Par une manipulation prédéfinie, par exemple en cliquant sur la cellule du tableau, l'utilisateur peut accéder à l'information initiale ayant été agrégée. Cette information initiale, non encore agrégée, correspond à un niveau hiérarchique inférieur plus détaillé. Par exemple, en cliquant sur le chiffre d'affaires d'un client, l'utilisateur peut connaître le détail des pièces achetées par le client considéré. Pour ce faire, le dispositif décrit dans ce brevet comporte une table de correspondance qui permet de lier la table agrégée CA avec les tables initiales contenant l'information détaillée sur lesquelles l'administrateur a fait porter sa requête. Lorsque l'utilisateur souhaite accéder à cette information détaillée, le système permet de retrouver le contenu de la table initiale et de le présenter à l'utilisateur.

Ainsi, dans le brevet Business Objects S.A., les données agrégées ne sont pas des données complexes. Il ne s'agit pas non plus d'effectuer des opérations sur les données. La table de correspondance permet simplement de remonter à l'information initiale monovaluée à partir de laquelle une information agrégée monovaluée a été construite.

Une collaboration de laboratoires européens et d'entreprises a mis au point un logiciel appelé SODAS de manière à valider les algorithmes d'analyse de données complexes. Dans le cadre de cette collaboration, un module rudimentaire permettant de transformer les données monovaluées d'une base de données relationnelle en des données complexes a été développé. L'idée générale du module DB2SO, "Database to Symbolic Objects", est de construire, au moyen d'un unique champ classifiant, une table de données complexes résumant l'information contenue dans une base relationnelle. Il s'agit ensuite, au moyen des modules d'analyse du logiciel SODAS, d'extraire des connaissances par l'analyse des données complexes contenues dans la table de données complexes.

Soit une base de données initiale comportant une table HABITANT dont les individus sont caractérisés par les valeurs des champs Sexe, Age et Ville. Chaque individu est d'abord associé à un champ classifiant : un individu est associé à une ville particulière. Une nouvelle table VILLE est ensuite construite. Les unités statistiques de la table VILLE sont identifiées par les différentes valeurs possibles du champ classifiant Ville. Les colonnes de la table VILLE sont obtenues à partir des champs de la table HABITANT qui n'ont pas été retenus comme champ classifiant : Sexe et Age dans notre exemple. Ainsi, dans la nouvelle table VILLE, une ville particulière est décrite selon le champ Age par une donnée complexe qui est une généralisation des valeurs du même champ qui caractérisent le lot d'individus ayant été associé à une ville particulière. Dans la version actuelle du module DB2SO, les données complexes possibles sont du type histogramme et intervalle. L'analyse de données complexes peut finalement être faite sur la nouvelle table VILLE.

Il est à noter que la synthèse des valeurs des champs classiques de la table initiale est obtenue par des opérateurs de généralisation ou règles. Par exemple une règle intervalle permet de transformer un lot de valeurs monovaluées en un intervalle en prenant par exemple le minimum et le maximum de ce lot de valeurs.

Il est donc un besoin pour des outils logiciels plus performants afin de créer à partir de bases de données relationnelles des tables de données complexes. Puisque l'opération d'élaboration d'une table de données complexes en vue d'une analyse complexe fait intervenir l'utilisateur, il est nécessaire de fournir à ce dernier des interfaces permettant de « manipuler » facilement les données complexes.

Les documents Diday E., "Symbolic data Analysio- A Mathematical Framework and Tool for Data Mining", avril 2000, US-A-5 933 818 et CA-A1-2329904 se rapportent aux données complexes.

L'invention a donc pour but de résoudre les problèmes mentionnés précédemment.

L'invention a pour objet un procédé de traitement de données selon la revendication 1.

Avantageusement, le procédé selon l'invention permet de construire des tables de données complexes, lesdites données complexes ayant été construites à partir d'une pluralité de champs classifiants, tout en conservant chacun des champs classifiants comme un champ de la table de données complexes.

De préférence, le procédé comporte une étape supplémentaire consistant à visualiser ladite deuxième table en présentant graphiquement lesdites valeurs complexes à un utilisateur.

Le procédé comporte les étapes consistant à :
- Choisir deux champs classifiants parmi ladite pluralité de champs classifiants en tant que champ ligne et champ colonne, et un champs parmi lesdits deuxièmes champs qui n'ont pas été choisis de ladite deuxième table en tant que champ choisi pour être représenté ; et,
- Générer un tableau croisé dont les lignes correspondent aux valeurs possibles dudit champ ligne, dont les colonnes correspondent aux valeurs possibles dudit champ colonne, et dont les cellules comportent les valeurs complexes dudit champ choisi pour être représenté.

Avantageusement, lorsque un tableau comportant deux champs classifiants peut être extrait de la table de données complexes, il est possible de présenter ce tableau à l'utilisateur sous la forme d'un tableau croisé.

De préférence, lorsque la deuxième table comporte un autre champ classifiant en plus des champs choisis en tant que champs ligne et colonne, soit ledit autre champ classifiant est le champ choisi pour être représenté et ladite étape de génération d'un tableau croisé comporte une étape de synthèse d'un lot de valeurs de deuxièmes unités statistiques, soit ledit autre champ classifiant n'est pas le champ choisi pour être représenté et l'étape de génération d'un tableau croisé comporte une agrégation dudit lot de valeurs de deuxièmes unités statistiques, lesdites deuxièmes unités statistiques dudit lot ayant des coordonnées de n-uplet identifiant selon les deux coordonnées correspondant aux champs ligne et colonne qui sont identiques.

De préférence, le procédé comporte une étape d'importation initiale de données pour construire ladite première table de données classiques selon un format prédéterminé.

De préférence, ladite première table résultant de l'étape d'importation est une première table brute, et en ce que le procédé comporte une étape de filtrage consistant à filtrer le contenu de ladite première table brute pour obtenir ladite première table.

De préférence, le procédé comporte une étape consistant à définir le domaine des valeurs possibles d'un premier champ de manière à ordonner lesdites valeurs pour pouvoir présenter graphiquement les valeurs complexes du champ non classifiant dérivant dudit premier champ.

De préférence, le procédé comporte une étape consistant à sélectionner la règle de synthèse associée audit champ non classifiant lors de ladite étape de synthèse.

L'invention a également pour objet un logiciel de traitement de données pour mettre en oeuvre un procédé selon l'un des procédé ci-dessus, caractérisé en ce que, à partir d'une première table de données classiques comportant une pluralité de premiers champs et une pluralité de premières unités statistiques, il est apte à produire une deuxième table de données complexes comportant une pluralité de deuxièmes champs constituée d'une pluralité de champs classifiants et d'au moins un champ non classifiant, et une pluralité de deuxièmes unités statistiques respectivement identifiées par un n-uplet identifiant dont chaque coordonnée correspond à une valeur possible de l'un desdits champs classifiants, et en ce qu'il comporte :
- un moyen de sélection de champs en tant que champs classifiants parmi ladite pluralité de premiers champs, et au moins un champ en tant que champ non classifiant parmi lesdits premiers champs qui n'ont pas été sélectionnés en tant que champs classifiants ;
- un moyen de détermination des deuxièmes unités statistiques apte à déterminer lesdits n-uplets identifiants à partir des valeurs possibles desdits premiers champs sélectionnés en tant que champs classifiants ; et,
- un moyen de synthèse apte à calculer une valeur complexe d'une deuxième unité statistique selon ledit champ non classifiant, à partir d'un lot de valeurs classiques de premières unités statistiques selon le premier champ dont dérive ledit champ non classifiant, les premières unités statistiques dudit lot ayant des valeurs selon les premiers champs dont dérivent lesdits champs classifiants coïncidant avec les coordonnées dudit n-uplet identifiant de ladite deuxième unité statistique.

De préférence, le logiciel comporte un module de visualisation apte à présenter graphiquement lesdites valeurs complexes à un utilisateur.

De préférence, le logiciel comporte un moyen de choix de deux champs classifiants parmi ladite pluralité de champs classifiants en tant que champ ligne et champ colonne, et d'un champ parmi lesdits deuxièmes champs qui n'ont pas été choisis de ladite deuxième table en tant que champ choisi pour être représenté, et un moyen de génération de tableau croisé apte à générer un tableau croisé dont les lignes correspondent aux valeurs possibles dudit champ ligne, dont les colonnes correspondent aux valeurs possibles dudit champ colonne, et dont les cellules comportent les valeurs complexes dudit champ choisi pour être représenté.

De préférence, le logiciel comporte un moyen d'importation de données apte à construire ladite première table de données classiques selon un format prédéterminé.

De préférence, ladite première table construite par ledit moyen d'importation est une première table brute, et le logiciel comporte un moyen de filtrage permettant de filtrer le contenu de ladite première table brute pour obtenir ladite première table.

De préférence, le logiciel comporte un moyen d'édition de domaine permettant de définir le domaine des valeurs possibles d'un premier champ dans le but d'ordonner lesdites valeurs pour pouvoir présenter graphiquement les valeurs complexes du champ non classifiant dérivant dudit premier champ.

De préférence, le logiciel comporte un moyen de sélection d'une règle de synthèse permettant de sélectionner la règle de synthèse associée audit champ non classifiant lors de ladite étape de synthèse.

L'invention a également pour objet une architecture informatique programmée apte à exécuter les instructions d'un logiciel, caractérisée en ce que ledit logiciel correspond à l'un des logiciels décrits ci-dessus.

L'invention sera mieux comprise grâce à la description qui va suivre donnée à titre d'exemple non limitatif en référence aux dessins annexés dans lesquels :
- La figure 1 représente une fenêtre de visualisation d'une première table de données classiques ;
- La figure 2 est un schéma blocs des étapes du procédé selon l'invention mis en oeuvre dans une architecture informatique particulière ;
- Les figures 3A et 3B représentent respectivement une fenêtre permettant à l'utilisateur de déterminer les paramètres d'une synthèse ;
- La figure 4 représente une fenêtre de visualisation d'une deuxième table de données complexes ;
- la figure 5 représente un autre exemple d'une deuxième table de données complexes ;
- la figure 6 représente une fenêtre permettant à l'utilisateur de paramétrer un tableau croisé à partir de la deuxième table de la figue 5 ; et,
- la figure 7 représente un tableau croisé obtenu selon le paramétrage de la figure 6 à partir de la table de la figure 5.

Le procédé selon l'invention est de préférence mis en oeuvre sous la forme d'un logiciel de traitement de données. Le logiciel comporte une suite d'instructions exécutables par un ordinateur hôte. L'ordinateur hôte comporte une mémoire apte à stocker les instructions du logiciel et un processeur apte à exécuter les instructions du logiciel. L'ordinateur hôte comporte un système d'exploitation pour lequel le logiciel selon l'invention apparaît comme une application. L'ordinateur hôte gère différents périphériques tels qu'un écran, une souris, etc., permettant à l'utilisateur d'interagir avec le logiciel au travers d'une interface homme/machine. En variante, l'architecture informatique peut être distribuée au sens où un utilisateur disposant d'un ordinateur distant connecté à l'ordinateur hôte au moyen d'un réseau supportant le protocole **TCP/IP** peut interagir avec le logiciel.

Lors de chaque nouvelle exécution du logiciel, une nouvelle cession de travail est initialisée. Toutes les opérations de traitement de données qui auront lieu seront enregistrées avec un identifiant caractérisant la cession courante. L'utilisateur peut également sortir de la cession courante et charger une cession antérieure afin de poursuivre les opérations de traitement de données entreprises au cours de cette cession antérieure.

Lorsque l'utilisateur lance l'exécution du logiciel de traitement de données selon l'invention, une interface homme/machine, d'un type par ailleurs connue, constituée de fenêtres, de cadres et de menus déroulants apparaît à l'écran. Les menus déroulants présentent différents choix de fonctions. Lorsque l'utilisateur sélectionne une fonction, le module correspondant du logiciel est exécuté effectuant une opération associée.

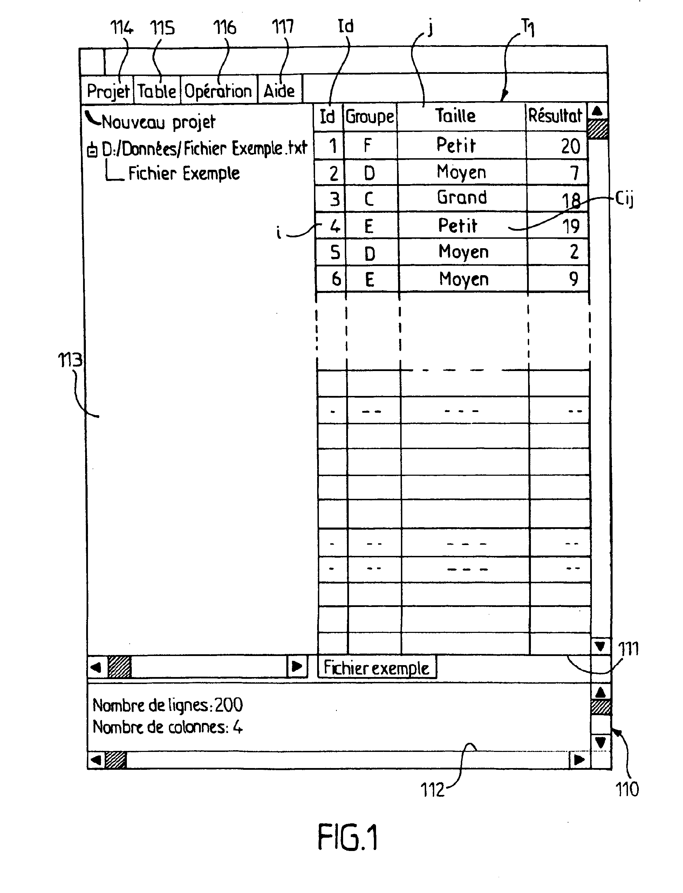

Sur la figure 1, une fenêtre 110 comportant trois cadres 111 à 113 et quatre menus 114 à 117 constitue l'interface du logiciel. L'interface 110, constituant un moyen de visualisation, comporte un cadre 111 dans lequel est présentée une table courante sur laquelle portent les opérations de traitement de données. Une table de données classiques T1 est présentée à titre d'exemple dans le cadre 111 de la figure 1. Elle comporte une pluralité de lignes et une pluralité de colonnes. Le cadre 112 indique que la table comporte 200 lignes et 4 colonnes. Chaque ligne de la table correspond à une unité statistique. Chaque colonne correspond à un champ, ayant un nom, un ensemble de valeurs possibles et éventuellement une relation ou domaine permettant de classer ou d'ordonner, les unes par rapport aux autres, les valeurs possibles de ce champ. Il est à noter que l'ensemble des valeurs possibles peut être continu. L'unité statistique est caractérisée par les valeurs particulières que prennent les différents champs.

Sur la figure 1, la table T1 étant une table de données classiques, les valeurs des différents champs sont des données monovaluées. Ainsi, la cellule Cᵢⱼ de la table T1 correspond à la valeur du champ associé à la colonne j et à l'unité statistique associée à la ligne i. En l'occurrence, la valeur « petit » du champ « Taille » du 4^{ème} individu. Le premier champ d'une table est, en général, un champ identifiant « Id » permettant d'identifier chaque unité statistique. Dans la table T1, l'identification est faite au moyen d'un unique entier.

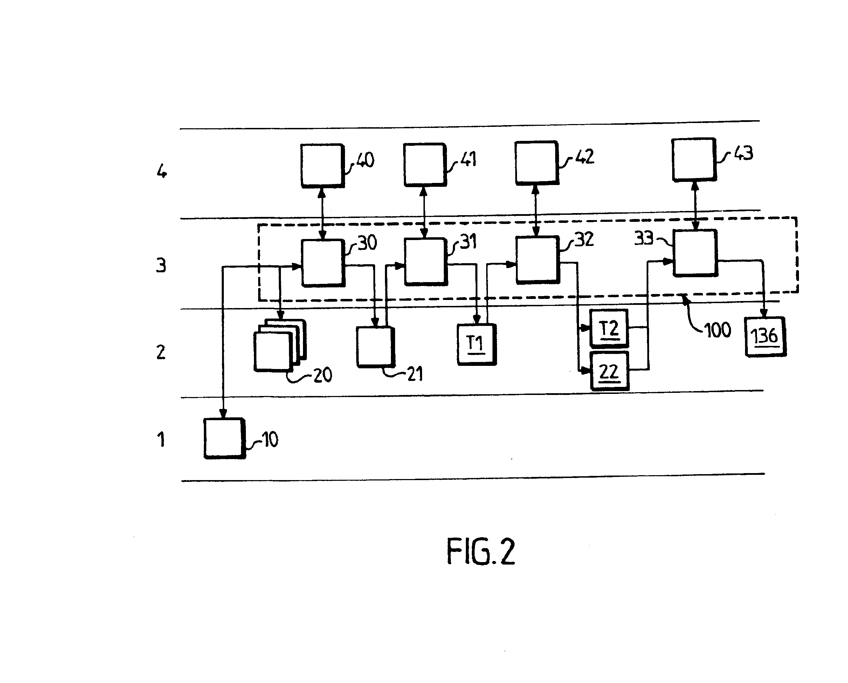

Sur la figure 2, le logiciel de traitement de données 100 comporte un moyen d'importation 30 permettant d'importer des fichiers dans lesquels les données sont stockées sous des formats différents du format type prédéterminé de la première table T1. Par exemple, le moyen d'importation 30 permet d'importer le contenu d'un fichier texte 10 stocké sur un ordinateur distant 1. Dans, le fichier texte 10, les valeurs associées à chaque unité statistique sont écrites sur une ligne et séparées les unes des autres par un délimiteur tel qu'une barre verticale. De préférence, le moyen d'importation 30 comporte une interface dans laquelle l'utilisateur paramètre l'importation en définissant le fichier à importer, le délimiteur entre les données, les données à prendre en compte, le nom des champs, l'ensemble des valeurs acceptables d'un champ etc. Ce travail peut également être fait de manière automatique par le moyen d'importation 30.

Le logiciel peut être connecté à une base de données du type relationnelle 2. Cette connexion est faite en choisissant un lien pointant vers la base de données 2. A ce lien est associé le langage nécessaire pour travailler avec la base de données 2. Il peut s'agir d'une simple connexion en lecture pour charger le contenu d'une table 20 de la base de données 2 vers la mémoire vive de l'ordinateur hôte.

En variante, comme cela est représenté sur la figure 2, la connexion est en lecture/écriture et le logiciel de traitement 100 mémorise non plus dans la mémoire vive de l'ordinateur 3 mais dans la base de données relationnelle 2 les résultats des opérations effectuées au cours d'une cession, telles que la mise à jour des valeurs d'une table, la création d'une table intermédiaire, etc. La problématique de la mémorisation des données relève plus d'une question de rapidité d'accès aux données que de la structure du logiciel selon l'invention.

On notera que l'opération d'importation pourrait être faite avec les outils de la base de données relationnelle 2 pour générer une première table de données d'un type convenable résidant dans la base de données 2. Mais, l'avantage d'intégrer un moyen d'importation dans le logiciel de traitement 100 consiste à proposer à l'utilisateur un unique outil centralisé pour préparer les données sur lesquelles il souhaite faire porter son analyse. De plus, l'importation réalisée au niveau de la base de données 2 nécessite la connaissance du langage du moteur associé à la base. Le fait d'intégrer un module d'importation 30 dans le logiciel permet à l'utilisateur de s'affranchir de cette connaissance.

La première table créée par importation est visualisable sur l'écran 4 de l'utilisateur (étape 40). Il peut s'agir d'une première table brute 21 nécessitant une étape de filtrage 31 pour produire une première table T1 de données classiques. Soit l'utilisateur au travers de l'interface 110 filtre lui-même les valeurs importées, soit le logiciel 100 dispose de moyens automatiques de filtrage. Par exemple, en sélectionnant une colonne de la première table brute 21, le logiciel présente les valeurs caractéristiques de cette colonne à l'utilisateur : valeur minimum, valeur maximum, moyenne, écart type, etc. L'utilisateur peut alors choisir de supprimer les individus s'écartant trop de la valeur moyenne. Le logiciel filtre alors automatiquement la table brute 21 pour obtenir une nouvelle table. L'opération de filtrage se poursuit jusqu'à obtenir une première table de données classiques T1 apte à subir une opération de synthèse.

Le logiciel 100 comporte également un moyen de création de domaine. Une interface permet à l'utilisateur de visualiser l'ensemble des valeurs possibles d'un champ. L'utilisateur peut restreindre les valeurs possibles. Les individus caractérisés par une valeur qui n'est pas retenue dans le domaine restreint ainsi défini prend une valeur indéfinie. Cette sélection de valeurs possibles permettant de contraindre ou de restreindre l'importation, correspond finalement à l'application d'un filtre. L'utilisateur peut ordonner les valeurs possibles les unes par rapport aux autres de manière à créer une relation d'ordre sur ce domaine. L'utilisateur peut également définir une distance entre les valeurs possibles du champ. Cet ordonnancement de l'ensemble des valeurs possibles d'un premier champ de la première table T1 à un intérêt tout particulier pour représenter graphiquement la valeur complexe d'un champ dérivant de ce champ ordonné, comme cela sera décrit ci-dessous.

Le logiciel 100 comporte une fonctionnalité permettant d'associer différentes tables élémentaires afin de former une première table de données classiques T1.

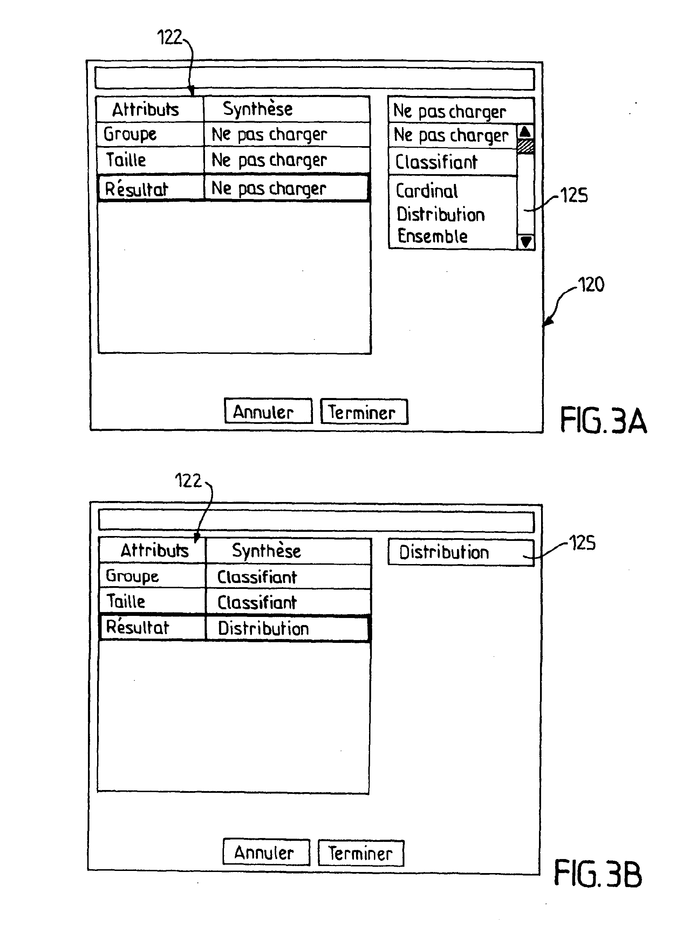

Il s'agit ensuite de réaliser une synthèse 32 sur la première table de données classique T1 de manière à créer une deuxième table de donnés complexes T2 : certains des champs de cette dernière sont complexes. L'opération de synthèse 32 est lancée en sélectionnant, dans le menu « opération », la fonction « synthèse ». Une fenêtre 120 du type de celle représentée à la figure 3A apparaît à l'écran 4. Cette étape est représentée sur la figure 2 par l'élément 42. Les champs de la première table T1 sont présentés dans la première colonne du tableau 122. Parmi l'ensemble des premiers champs, l'utilisateur est invité à sélectionner ceux qu'il souhaite voir être des champs classifiants de la deuxième table T2. Puis, parmi les champs de la première table T1 qui n'ont pas été sélectionnés en tant que champs classifiants, l'utilisateur sélectionne des premiers champs en tant que champs non classifiants de la deuxième table T2.

A défaut, les données d'un premier champ qui n'est sélectionné ni en tant que champ classifiant ni en tant que champ non classifiant ne sont pas chargées dans la deuxième table T2. Ceci correspond au cas où l'utilisateur estime que la variable que représente ce premier champ non sélectionné n'est pas utile dans la suite de l'analyse.

Pour un premier champ sélectionné en tant que champ non classifiant de la deuxième table T2, l'utilisateur choisit le type de données complexes qui doit être associé à ce champ non classifiant : une distribution, un ensemble, un nombre d'entrées, une courbe, un intervalle ou l'équivalent. Le fait d'associer un type de donnée complexe à un champ non classifiant permet de définir la règle de synthèse qui va être utilisée pour calculer la valeur complexe.

Le logiciel permet d'ajouter des modules supplémentaires de type de données complexes en fonction des besoins de l'utilisateur et des développements conduisant à la mise en évidence d'un nouveau type de données complexes. Un module de type de données complexes comporte la règle de synthèse à utiliser lors de la synthèse d'un lot de valeurs. Le nom du type de la donnée complexe correspondant apparaît dans le menu déroulant 125 de l'interface de synthèse.

Une fois que l'utilisateur a validé les paramètres de sa synthèse en appuyant sur le bouton « Terminer » de l'interface représentée à la figure 3B, la synthèse débute par la recherche des deuxièmes unités statistiques de la deuxième table T2.

L'utilisateur a sélectionné N champs classifiants. Le n^{ième} champs classifiant possède Lₙ valeurs possibles qui sont les Lₙ valeurs possibles du premier champ dont dérive le n^{ième} champ classifiant. Par exemple l'algorithme suivant pourrait être utilisé pour déterminer l'ensemble des valeurs possibles Vₗₙ du n^{ième} champ classifiant (où K est le nombre total de premières unités statistiques de la première table T1) :

| | | | |
|---|---|---|---|
| Début | | | |
| N champs classifiants | | | |
| Ordonner T1 pour faire apparaître en tête de table les N champs classifiants | | | |
| Boucle sur n allant de 1 à N | | | |
| | K premières unités statistiques | | |
| | Initialisation d'une variable Vlₙ | | |
| | Trier les lignes de T1 selon les valeurs des cellules de la colonne n | | |
| | Boucle sur k allant de 1 à K | | |
| | | Lire T1(kn) valeur de la cellule ligne k colonne n de T1 | |
| | | Comparer T1(kn) avec la valeur Vlₙ actuelle du n^{ième} champ classifiant | |
| | | Si T1(kn) = Vlₙ | |
| | | | Boucler sur k |
| | | Sinon | |
| | | | Incrémenter le compteur lₙ donnant le nombre de valeurs possibles |
| | | | Affecter à Vlₙ la valeur T1(kn) du champ n |
| | | | Boucler sur k |
| | Affecter la dernière valeur de lₙ à Lₙ | | |
| Fin | | | |

En conséquence, le nombre I maximum de deuxièmes unités statistiques est donné par le produit des N nombres Lₙ. La deuxième table T2 comprend initialement I lignes. La deuxième table T2 peut alors être générée dans l'espace mémoire ou dans la base de données. Les N premières colonnes de cette deuxième table T2 correspondent aux N champs classifiants. Les deuxièmes champs suivant correspondent aux champs non classifiants.

Chaque deuxième unité statistique est ensuite identifiée par un n-uplet identifiant à N coordonnées, chaque coordonnée correspondant à l'une des valeurs possibles de l'un des N champs classifiants. Pour chaque unité statistique de la deuxième table T2, il s'agit donc de compléter les N premières cellules avec des valeurs possibles des champs classifiants, mais avec la contrainte que les n-uplets identifiants doivent être différents d'une deuxième unité statistique à l'autre. Un algorithme tel que l'algorithme suivant peut être utilisé :

| | | | |
|---|---|---|---|
| | Début | | |
| | N Boucles imbriquées comportant des compteurs entiers lₙ allant de 1 à Lₙ | | |
| | | Boucle sur n allant de 1 à N | |
| | | | T2 deuxième table ordonnée pour débuter par les N champs classifiants |
| | | | Ecrire la valeur Vlₙ dans la cellule T2(in) de T2 |
| | | | Boucler sur n |
| | | Incrémentation du compteur entier i | |
| | Fin | | |

La synthèse se poursuit en complétant les cellules de la seconde partie de la deuxième table T2 constituée des colonnes des champs non classifiants. Pour un n-uplet identifiant donné, il s'agit de synthétiser les valeurs classiques du premier champ, dont dérive le champ non classifiant, d'un lot de premières unités statistiques. Les premières unités statistiques de ce lot sont caractérisées par le fait que les N valeurs des premiers champs choisis comme champs classifiants coïncident avec les N coordonnées du n-uplet identifiant considéré. Cette synthèse est effectuée au moyen de la règle qui a été associée au champ non classifiant. Par des boucles imbriquées successives, les différentes cellules de la seconde partie du deuxième tableau sont complétées et les données complexes correspondantes sont mémorisées dans l'espace mémoire de l'ordinateur ou dans la base de données relationnelle associée. Pour cette étape, un algorithme équivalent à l'algorithme suivant est exécuté :

| | | |
|---|---|---|
| Début | | |
| M un champ non classifiant | | |
| I le produit des nombres Lₙ de valeurs des N champs classifiants | | |
| Boucle sur i allant de 1 à I | | |
| | K nombre de premières unités statistiques | |
| | Boucle sur k allant de 1 à K | |
| | | Si T2(in) = T1 (kn) quel que soit n allant de 1 à N |
| | | Alors Synthétiser la valeur T1(kM) avec la valeur actuelle de T2(iM) en |
| utilisant la règle R et écrire la nouvelle valeur de T2(iM) | | |
| | | Boucler sur k |
| | Boucler sur i | |
| Fin | | |

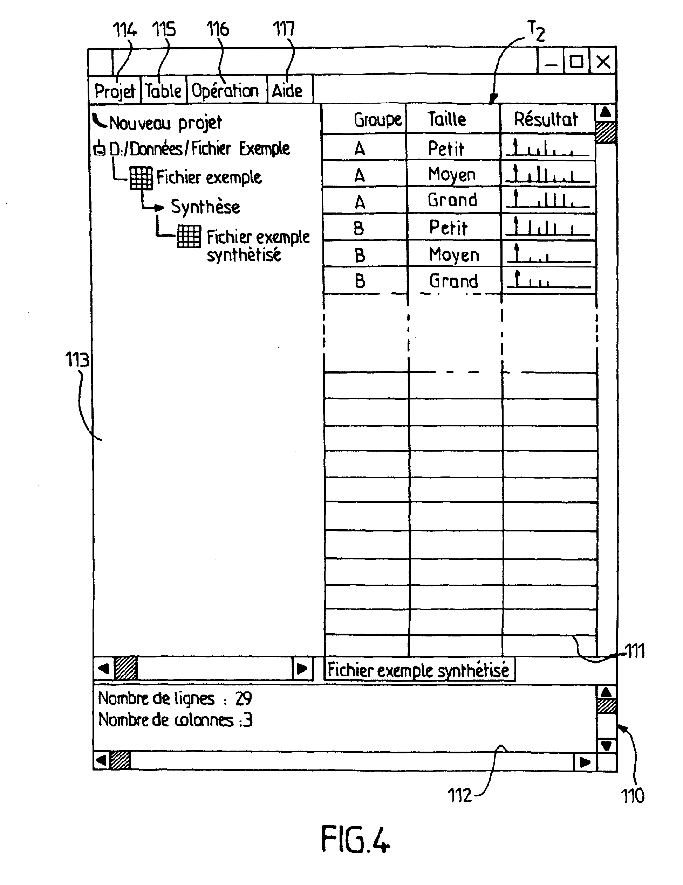

A l'issue de l'opération de synthèse 32 (figure 2) et de la génération de la deuxième table T2, l'utilisateur accède au contenu de la deuxième table T2 au travers de l'interface 110 de visualisation, comme cela est représenté sur la figure 4. Le moyen de visualisation du logiciel de la présente invention autorise la présentation sous forme de graphique des valeurs complexes contenues dans les cellules de la deuxième table T2. Dans le cadre 111, les deux premières colonnes correspondent aux champs classifiants « Groupe » et « Taille ». Le nombre maximum de lignes de la deuxième table T2 correspond au nombre de valeurs différentes que peut prendre le champ « Groupe » multiplié par le nombre de valeurs que peut prendre le champ « Taille ». A l'issue de la synthèse il se peut qu'un n-uplet identifiant ne corresponde à aucun individu de la première table T1. Dans ce cas la ligne correspondante est automatiquement supprimée afin de réduire l'espace mémoire occupé par la deuxième table T2. Ainsi, dans le cas d'espèce de la figure 4, il y a 29 lignes comme cela est indiqué dans le cadre 112. Par l'opération de synthèse, le champ non classifiant « Résultat » a été déterminé. Il s'agit ici d'un champ complexe du type distribution. L'interface de visualisation permet de représenter chaque cellule contenant une donnée complexe du type distribution sous la forme d'un axe gradué sur lequel est porté le nombre de fois qu'une valeur donnée du champ « Résultat » de la première table T1 est rencontrée dans le lot de premières unités statistiques, lot qui correspond à la deuxième unité statistique considérée, c'est-à-dire à une valeur donnée du n-replet de champs identifiants. Si le champ est d'un autre type, une présentation graphique adaptée est proposée à l'utilisateur. Comme décrit plus haut, l'interface 110 présente toutes les fonctionnalités d'un tableur adapté aux données complexes.

Avantageusement, le logiciel possède une fonctionnalité (indiquée par la référence 33 sur la figure 2) permettant de réaliser un tableau croisé en choisissant deux champs classifiants parmi la pluralité de champs classifiants d'une deuxième table en tant que champ ligne et champ colonne respectivement ; puis en choisissant un champ parmi les champs restants de la deuxième table en tant que champ choisi ; et à présenter les données complexes du champ choisi dans un tableau croisé dont les lignes correspondent aux valeurs du champ ligne et les colonnes aux valeurs du champ colonne.

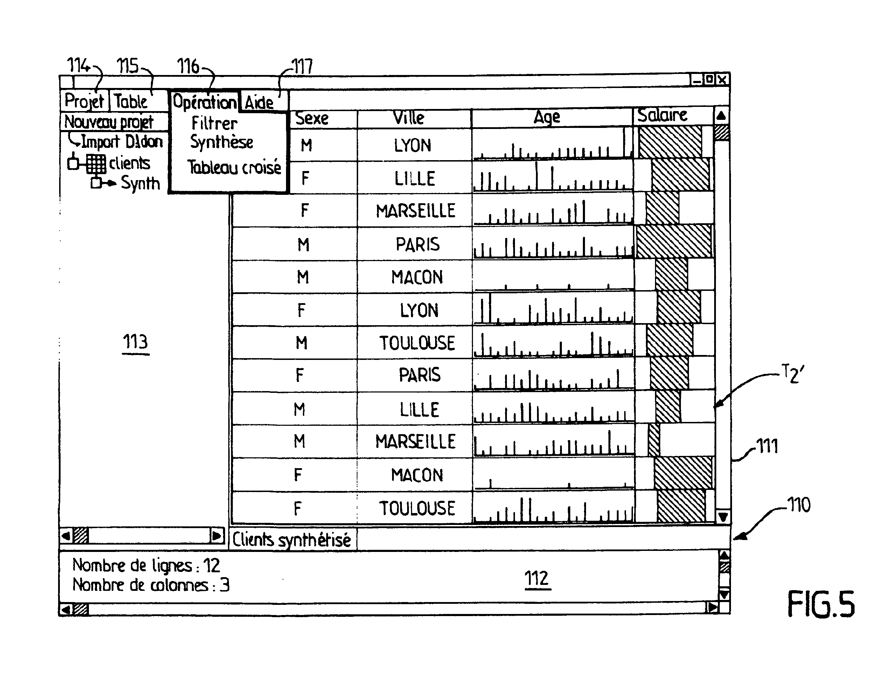

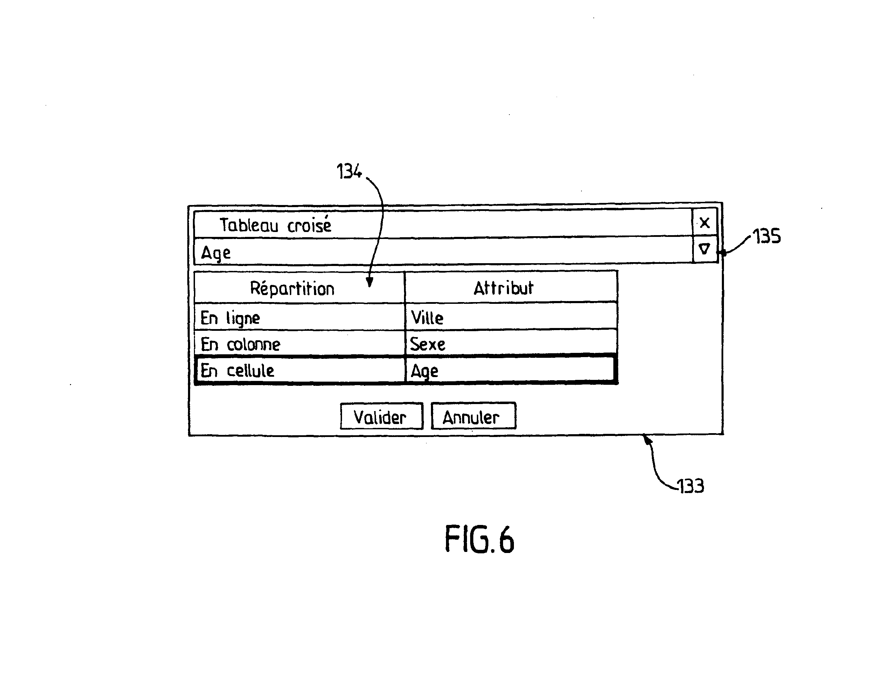

Sur les figures 5 et suivantes, une autre table de données complexes T2' est utilisée comme exemple. On notera en particulier la représentation graphique du champ complexe « Salaire » qui est du type intervalle. Comme cela est représenté à la figure 5, il s'agit dans un premier temps de sélectionner dans le menu « opération » 116 la fonction « tableau croisé ». Une fenêtre 133 du type de celle représentée à la figure 6 est alors affichée. La fenêtre 133 présente un tableau 134 possédant deux colonnes et trois lignes. La première colonne rappelle les trois paramètres à définir afin de réaliser le tableau croisé : il s'agit de définir le champ classifiant du deuxième tableau T2' qui sera présenté en ligne, le champ classifiant du deuxième tableau T2' qui sera présenté en colonne, et le champ choisi parmi les champs restants qui sera présenté dans les cellules du tableau croisé. Il est à noter que le champ choisi peut être un champ classifiant ou un champ non classifiant. Les cellules de la deuxième colonne « Attribut » du tableau 134 sont paramétrables au moyen du menu déroulant 135 reprenant l'ensemble des champs de la deuxième table T2'. L'utilisateur lance la construction du tableau croisé en appuyant sur le bouton « valider » de la fenêtre 133. Eventuellement, si la deuxième table de données complexes comporte plus de deux champs classifiants, il est alors nécessaire de regrouper les valeurs complexes d'un lot de deuxièmes unités statistiques qui possèdent des n-uplets identifiants identiques quant aux coordonnées selon les champs ligne et colonne choisis. De plus, si le champ choisi est un champ classifiant caractérisé par des données classiques, il est nécessaire de procéder à une opération de synthèse. Les étapes de cette opération de synthèse ont été décrites ci-dessus.

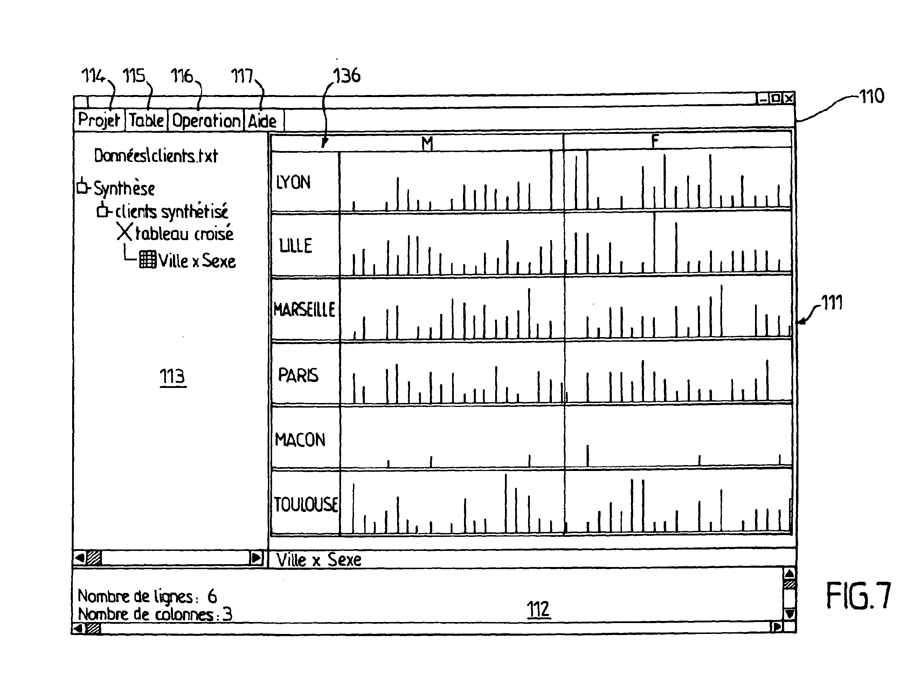

A l'issue de l'opération 33, l'interface de visualisation 110 permet de présenter le tableau croisé obtenu. Plus particulièrement l'interface 110 permet de présenter graphiquement le contenu des cellules du tableau croisé, comme cela est représenté à la figure 7. Sur cette figure, on a représenté un tableau croisé 136 réalisé à partir du deuxième tableau T2' de la figure 5 selon le paramétrage indiqué dans le tableau 134 de la figure 6.

Selon les mêmes principes, on peut obtenir un tableau croisé dont les colonnes présentent successivement plusieurs champs classifiants du tableau T'2. Pour cela, on donne à l'utilisateur la possibilité de sélectionner plusieurs champs classifiants du tableau T'2 en tant que champs devant être présentés en colonne. Dans cette variante, l'interface de la Figure 6 est modifiée pour laisser l'utilisateur associer simultanément plusieurs champs à une cellule de la deuxième colonne du tableau 134.

A l'issue du travail de préparation des données complexes dont l'historique est repris schématiquement dans le cadre 113 de l'interface 110, l'utilisateur poursuit en faisant porter son analyse complexe sur une deuxième table de données complexes.

Bien que l'invention ait été décrite en liaison avec un mode de réalisation particulier, il est bien évident qu'elle n'est nullement limitée à celui-ci et qu'elle comprend tous les équivalents techniques des moyens décrits ainsi que leurs combinaisons si celles-ci entrent dans le cadre de l'invention.

En particulier, bien que la première table T1 ait été décrite comme une table de données classiques, il est évident que la table T1 peut contenir des champs complexes. Le moyen d'importation peut donc autoriser l'importation de fichiers comportant des données complexes. De même, les champs non classifiants de la deuxième table de données peuvent être des champs classiques obtenus par une opération d'agrégation d'un lot de premières unités statistiques. Pour cela, le menu déroulant de la fenêtre 120 des figures 3A et 3 B peut être modifié de manière à présenter des opérations d'agrégation du type moyen, minimum, maximum ou l'équivalent.

## Revendications

1. Procédé de traitement de données au moyen d'un ordinateur (3) ayant accès à des données sous la forme d'une première table de données classiques (T1) comportant une pluralité de premiers champs (j) et une pluralité de premières unités statistiques (i), comprenant les étapes consistant à :
mettre à la disposition d'un utilisateur une interface de sélection de champ permettant de sélectionner des champs parmi lesdits premiers champs en tant que champs classifiants, puis au moins un champ parmi lesdits premiers champs qui n'ont pas été sélectionnés comme champs classifiants en tant que champ non classifiant ;
construire une deuxième table de données complexes comportant une pluralité de deuxièmes champs et une pluralité de deuxièmes unités statistiques, une donnée complexe étant entendue comme une donnée nécessitant plusieurs données classiques pour assurer sa définition, ladite pluralité de deuxièmes champs étant constituée d'une pluralité de champs classifiants sélectionnés et d'au moins un champ non classifiant sélectionné, ladite deuxième table ayant un nombre de colonnes correspondant au nombre desdits deuxièmes champs et un nombre de lignes correspondant au nombre desdites deuxièmes unités statistiques, qui est au maximum égal au produit des nombres de valeurs possibles de chacun desdits champs classifiants ;
déterminer un n-uplet identifiant associé à chacune desdites deuxièmes unités statistiques de manière à identifier chacune desdites deuxièmes unités statistiques par un n-uplet identifiant dont chaque coordonnée correspond à une valeur possible de l'un desdits champs classifiants, et compléter les cellules correspondantes de ladite deuxième table ;
synthétiser, au moyen d'une règle de synthèse, une valeur complexe d'une deuxième unité statistique selon un champ non classifiant à partir d'un lot de valeurs classiques de premières unités statistiques selon le premier champ dont dérive ledit champ non classifiant, les premières unités statistiques dudit lot ayant des valeurs selon les premiers champs dont dérivent lesdits champs classifiants coïncidant avec les coordonnées dudit n-uplet identifiant de ladite deuxième unité statistique ; et,
compléter une cellule correspondante de ladite deuxième table avec ladite valeur complexe résultant de l'étape de synthèse dans le but de produire ladite deuxième table de données complexes (T2, T'2),
**caractérisé en ce qu'**il comporte les étapes consistant à :
- Mettre à la disposition d'un utilisateur une interface de choix permettant de choisir deux champs classifiants parmi ladite pluralité de champs classifiants en tant que champ ligne et champ colonne, et un champ parmi lesdits deuxièmes champs qui n'ont pas été choisis de ladite deuxième table en tant que champ choisi pour être représenté ; et,
- Générer un tableau croisé dont les lignes correspondent aux valeurs possibles dudit champ ligne, dont les colonnes correspondent aux valeurs possibles dudit champ colonne, et dont les cellules comportent les valeurs complexes dudit champ choisi pour être représenté.

2. Procédé selon la revendication 1, **caractérisé en ce qu'**il comporte une étape supplémentaire consistant à représenter graphiquement lesdites valeurs complexes de la deuxième table de données complexes sur une interface de visualisation pour laisser visualiser ladite deuxième table par un utilisateur.

3. Procédé selon la revendication 1 ou 2, **caractérisé en ce que**, lorsque ladite deuxième table comporte un autre champ classifiant en plus des champs choisis en tant que champs ligne et colonne, soit ledit autre champ classifiant est le champ choisi pour être représenté et ladite étape de génération d'un tableau croisé comporte une étape de synthèse d'un lot de valeurs de deuxièmes unités statistiques, soit ledit autre champ classifiant n'est pas le champ choisi pour être représenté et l'étape de génération d'un tableau croisé comporte une agrégation dudit lot de valeurs de deuxièmes unités statistiques, lesdites deuxièmes unités statistiques dudit lot ayant des coordonnées de n-uplet identifiant selon les deux coordonnées correspondant aux champs ligne et colonne qui sont identiques.

4. Procédé selon l'une quelconque des revendications 1 à 3, **caractérisé en ce que** le procédé comporte une étape d'importation initiale de données de différents formats pour construire ladite première table de données classiques selon un format prédéterminé.

5. Procédé selon la revendication 4, **caractérisé en ce que** ladite première table résultant de l'étape d'importation est une première table brute, et **en ce que** le procédé comporte une étape de filtrage consistant à filtrer le contenu de ladite première table brute pour obtenir ladite première table de données classiques (T1).

6. Procédé selon l'une des revendication 1 à 5, **caractérisé en ce qu'**il comporte une étape consistant à mettre à la disposition d'un utilisateur une interface d'édition de domaine permettant de définir le domaine des valeurs possibles d'un premier champ de manière à ordonner lesdites valeurs pour pouvoir présenter graphiquement les valeurs complexes du champ non classifiant dérivant dudit premier champ.

7. Procédé selon l'une quelconque des revendications 1 à 6, **caractérisée en ce qu'**il comporte une étape consistant à mettre à la disposition d'un utilisateur une interface de sélection de règle de synthèse permettant de sélectionner la règle de synthèse associée audit champ non classifiant lors de ladite étape de synthèse.

8. Architecture informatique programmée au moyen d'un programme informatique de traitement de données et apte à en exécuter les instructions, ledit programme informatique de traitement de données comportant des instructions exécutables pour mettre en oeuvre la totalité des étapes du procédé selon l'une des revendications 1 à 7, comportant :
- un ordinateur (3) ayant accès à des données sous la forme d'une première table de données classiques (T1) comportant une pluralité de premiers champs (j) et une pluralité de premières unités statistiques (i),
- un moyen de sélection de champs apte à sélectionner des champs en tant que champs classifiants parmi ladite pluralité de premiers champs, et à sélectionner au moins un champ en tant que champ non classifiant parmi lesdits premiers champs qui n'ont pas été sélectionnés en tant que champs classifiants ;
- un moyen pour produire une deuxième table de données complexes comportant une pluralité de deuxièmes champs constituée d'une pluralité desdits champs classifiants et d'au moins un dit champ non classifiant, et une pluralité de deuxièmes unités statistiques respectivement identifiées par un n-uplet identifiant dont chaque coordonnée correspond à une valeur possible de l'un desdits champs classifiants,
- un moyen de détermination des deuxièmes unités statistiques apte à déterminer lesdits n-uplets identifiants à partir des valeurs possibles desdits premiers champs sélectionnés en tant que champs classifiants ; et,
- un moyen de synthèse apte à calculer une valeur complexe d'une deuxième unité statistique selon ledit champ non classifiant, à partir d'un lot de valeurs classiques de premières unités statistiques selon le premier champ dont dérive ledit champ non classifiant, les premières unités statistiques dudit lot ayant des valeurs selon les premiers champs dont dérivent lesdits champs classifiants coïncidant avec les coordonnées dudit n-uplet identifiant de ladite deuxième unité statistique,
**caractérisé en ce qu'**elle comporte un moyen de choix apte à choisir deux champs classifiants parmi ladite pluralité de champs classifiants en tant que champ ligne et champ colonne, et à choisir un champ parmi lesdits deuxièmes champs qui n'ont pas été choisis de ladite deuxième table en tant que champ choisi pour être représenté, et un moyen de génération de tableau croisé apte à générer un tableau croisé dont les lignes correspondent aux valeurs possibles dudit champ ligne, dont les colonnes correspondent aux valeurs possibles dudit champ colonne, et dont les cellules comportent les valeurs complexes dudit champ choisi pour être représenté.

9. Architecture informatique programmée selon la revendication 8, **caractérisé en ce qu'**elle comporte un module de visualisation apte à présenter graphiquement lesdites valeurs complexes.

10. Architecture informatique programmée selon l'une quelconque des revendications 8 à 9, **caractérisé en ce qu'**elle comporte un moyen d'importation de données apte à construire ladite première table de données classiques selon un format prédéterminé.

11. Architecture informatique programmée selon la revendication 10, **caractérisé en ce qu'**elle comporte un moyen de filtrage permettant de filtrer le contenu de ladite première table construite par ledit moyen d'importation, dite première table brute, pour obtenir ladite première table de données classiques.

12. Architecture informatique programmée selon l'une quelconque des revendications 8 à 11, **caractérisé en ce qu'**elle comporte un moyen d'édition de domaine permettant de définir le domaine de valeur des valeurs possibles d'un premier champ dans le but d'ordonner lesdites valeurs pour pouvoir présenter graphiquement les valeurs complexes du champ non classifiant dérivant dudit premier champ.

13. Architecture informatique programmée selon l'une quelconque des revendications 8 à 12, **caractérisée en ce qu'**elle comporte un moyen de sélection d'une règle de synthèse permettant de sélectionner la règle de synthèse associée audit champ non classifiant lors de ladite étape de synthèse.

## Claims

1. A method for processing data by means of a computer (3) having access to data in the form of a first table of conventional data items (T1) containing a plurality of first fields (j) and a plurality of first statistical units (i), comprising the steps of:
making available to a user a field selection interface for selecting fields from said first fields as classifying fields, then at least one field from said first fields that have not been selected as classifying fields as non-classifying field;
constructing a second table of complex data items containing a plurality of second fields and a plurality of second statistical units, a complex data item being understood as a data item requiring several conventional data items to define it, said plurality of second fields being made up of a plurality of selected classifying fields and at least one selected non-classifying field, said second table having a number of columns corresponding to the number of said second fields and a number of rows corresponding to the number of said second statistical units, which is at most equal to the product of the numbers of possible values of each of said classifying fields;
determining an identifying n-tuple associated with each of said second statistical units so as to identify each of said second statistical units by an identifying n-tuple, each coordinate of which corresponds to a possible value from one of said classifying fields, and
completing the corresponding cells of said second table;
synthesizing, by means of a synthesis rule, a complex value of a second statistical unit according to a non-classifying field from a batch of conventional values of first statistical units according to the first field from which said non-classifying field is derived, the first statistical units of said batch having values according to the first fields from which said classifying fields are derived coinciding with the coordinates of said identifying n-tuple of said second statistical unit; and,
completing a corresponding cell of said second table with said complex value resulting from the synthesis step with the aim of producing said second table of complex data items (T2, T'2),
**characterized in that** it includes the steps of:
- making available to a user a choosing interface for choosing two classifying fields from said plurality of classifying fields as row field and column field, and one field from said second fields that have not been chosen from said second table as the field chosen to be represented; and,
- generating a cross-tabulated table, the rows of which correspond to possible values of said row field, the columns of which correspond to possible values of said column field, and the cells of which contain the complex values of said field chosen to be represented.

2. The method as claimed in claim 1, **characterized in that** it includes an additional step which involves graphically representing said complex values of the second table of complex data items on a displaying interface in order to allow said second table to be viewed by a user.

3. The method as claimed in claim 1 or 2, **characterized in that**, when said second table includes another classifying field in addition to the fields chosen as row and column fields, either said other classifying field is the field chosen to be represented and said step for generating a cross-tabulated table includes a step for synthesizing a batch of values of second statistical units, or said other classifying field is not the field chosen to be represented and the step for generating a cross-tabulated table includes an aggregation of said batch of values of second statistical units, said second statistical units of said batch having identifying n-tuple coordinates according to the two coordinates corresponding to the row and column fields which are identical.

4. The method as claimed in any one of claims 1 to 3, **characterized in that** the method includes an initial import step for importing data of various formats in order to construct said first table of conventional data items according to a predetermined format.

5. The method as claimed in claim 4, **characterized in that** said first table resulting from the import step is a first raw table, and **in that** the method includes a filtering step which involves filtering the content of said first raw table in order to obtain said first table of conventional data items (T1).

6. The method as claimed in one of claims 1 to 5, **characterized in that** it includes a step which involves making available to a user a range-editing interface for defining the range of possible values of a first field so as to order said values in order to be able to graphically present the complex values of the non-classifying field derived from said first field.

7. The method as claimed in any one of claims 1 to 6, **characterized in that** it includes a step of making available to a user a synthesis rule selection interface for selecting the synthesis rule associated with said non-classifying field during said synthesis step.

8. A computer-based architecture programmed by means of a data processing computer program and able to execute its instructions, said data processing computer program including instructions that can be executed to implement all the steps of the method according to one of claims 1 to 7, comprising:
- a computer (3) having access to data in the form of a first table of conventional data items (T1) containing a plurality of first fields (j) and a plurality of first statistical units (i),
- a field selection means able to select fields as classifying fields from said plurality of first fields, and to select at least one field as non-classifying field from said first fields that have not been selected as classifying fields;
- a means for producing a second table of complex data items containing a plurality of second fields formed of a plurality of said classifying fields and at least one said non-classifying field, and a plurality of second statistical units respectively identified by an identifying n-tuple, each coordinate of which corresponds to a possible value of one of said classifying fields,
- a means for determining second statistical units which is able to determine said identifying n-tuples from possible values of said first fields selected as classifying fields; and,
- a synthesis means able to compute a complex value of a second statistical unit according to said non-classifying field, from a batch of conventional values of first statistical units according to the first field from which said non-classifying field is derived, the first statistical units of said batch having values according to the first fields from which said classifying fields are derived coinciding with the coordinates of said identifying n-tuple of said second statistical unit,
**characterized in that** it includes a choosing means able to choose two classifying fields from said plurality of classifying fields as row field and column field, and to choose one field from said second fields that have not been chosen from said second table as the field chosen to be represented, and cross-tabulated table generation means able to generate a cross-tabulated table, the rows of which correspond to possible values of said row field, the columns of which correspond to possible values of said column field, and the cells of which contain the complex values of said field chosen to be represented.

9. The programmed computer-based architecture as claimed in claim 8, **characterized in that** it includes a displaying module able to graphically present said complex values.

10. The programmed computer-based architecture as claimed in any one of claims 8 to 9, **characterized in that** it includes a data import means able to construct said first table of conventional data items according to a predetermined format.

11. The programmed computer-based architecture as claimed in claim 10, **characterized in that** it includes a filtering means for filtering the content of said first table constructed by said import means, called first raw table, in order to obtain said first table of conventional data items.

12. The programmed computer-based architecture as claimed in any one of claims 8 to 11, **characterized in that** it includes a range-editing means for defining the value range of possible values of a first field with the aim of ordering said values in order to be able to graphically present the complex values of the non-classifying field derived from said first field.

13. The programmed computer-based architecture as claimed in any one of claims 8 to 12, **characterized in that** it includes a synthesis rule selection means for selecting the synthesis rule associated with said non-classifying field during said synthesis step.

## Patentansprüche

1. Verfahren zur Verarbeitung von Daten mittels eines Computers (3) mit Zugriff auf Daten in Form einer ersten Tabelle herkömmlicher Daten (T1), die eine Vielzahl von ersten Feldern (j) und eine Vielzahl von ersten statistischen Einheiten (i) enthält, wobei die Schritte darin bestehen, dass man:
- einem Anwender eine Oberfläche zur Auswahl von Feldern zur Verfügung stellt, die es erlaubt, unter den ersten Feldern bestimmte Felder als Klassifikationsfelder auszuwählen, dann mindestens ein Feld unter denjenigen ersten Feldern, die nicht als Klassifikationsfelder ausgewählt wurden, als Klassifikationsfeld auszuwählen;
- eine zweite Tabelle komplexer Daten erstellt, die eine Vielzahl zweiter Felder und eine Vielzahl von zweiten statistischen Einheiten enthält, wobei ein komplexes Datum verstanden wird als ein Datum, das mehrere herkömmliche Daten erforderlich macht, um seine Definition zugewährleisten, wobei die Vielzahl der zweiten Felder von einer Vielzahl von ausgewählten Klassifikationsfeldern und mindestens einem ausgewählten Nichtklassifikationsfeld gebildet wird, wobei die zweite Tabelle eine Spaltenzahl, die der Anzahl der zweiten Felder entspricht, und eine Zeilenzahl, die der Anzahl der zweiten statistischen Einheiten entspricht, besitzt, die maximal gleich dem Produkt der Zahlenwerte ist, die für jedes der Klassifikationsfelder möglich sind;
- ein N-Tupel zur Identifikation bestimmt, das mit jeder der zweiten statistischen Einheiten so assoziiert ist, dass jede der zweiten statistischen Einheiten durch ein N-Tupel zur Identifikation identifiziert wird, dessen Koordinaten alle einem möglichen Wert eines der Klassifikationsfelder entsprechen, und die entsprechenden Zellen der zweiten Tabelle ausfüllt;
- gemäß einer Bildungsregel aus einer zweiten statistischen Einheit und einem Nichtklassifikationsfeld einen komplexen Wert bildet, ausgehend von einem Teil der herkömmlichen Werte der ersten statistischen Einheiten gemäß dem ersten Feld, von dem das Nichtklassifikationsfeld abgeleitet ist, wobei die ersten statistischen Einheiten dieses Feldes Werte gemäß den ersten Feldern haben, von denen diejenigen Klassifikationsfelder abgeleitet sind, die mit den Koordinaten des identifizierenden N-Tupels der zweiten statistischen Einheit zusammenfallen; und
- eine Zelle, die der zweiten Tabelle entspricht, mit dem komplexen Wert ausfüllt, der sich aus dem Bildungsschritt ergibt, mit dem Ziel, die zweite Tabelle mit komplexen Daten (T2, T'2) zu bilden;
**dadurch gekennzeichnet, dass** es folgende Schritte umfasst:
- einem Anwender wird eine Auswahloberfläche zur Verfügung gestellt, die es erlaubt, zwei Klassifikationsfelder als Zeilenfeld und Spaltenfeld unter der Vielzahl der Klassifikationsfelder sowie ein Feld unter den zweiten Feldern, die nicht in der zweiten Tabelle ausgewählt wurden, als zur Darstellung ausgewähltes Feld auszuwählen; und
- eine Kreuzwerttabelle wird erzeugt, deren Zeilen den möglichen Werten des Zeilenfeldes, und deren Spalten den möglichen Werten des Spaltenfeldes entsprechen und deren Zellen die komplexen Werte des zur Darstellung ausgewählten Felds enthalten.

2. Verfahren nach Anspruch 1, **dadurch gekennzeichnet, dass** es einen zusätzlichen Schritt umfasst, der darin besteht, die komplexen Werte der zweiten Tabelle komplexer Daten auf graphische Weise auf einer Visualisierungsoberfläche darzustellen, um die zweite Tabelle für einen Anwender zu visualisieren.

3. Verfahren nach einem der Ansprüche 1 oder 2, **dadurch gekennzeichnet, dass**, wenn die zweite Tabelle ein anderes Klassifikationsfeld zusätzlich zu den als Zeilen- und Spaltenfelder ausgewählten Feldern enthält, entweder das andere Klassifikationsfeld das zur Darstellung ausgewählte Feld ist und der Schritt der Erzeugung einer Kreuzwerttabelle einen Schritt der Bildung einer Menge der Daten der zweiten statistischen Einheiten umfasst, oder das andere Klassifikationsfeld nicht das zur Darstellung ausgewählte Feld ist und der Schritt der Erzeugung einer Kreuzwerttabelle eine Aggregation dieser Menge der Daten der zweiten statistischen Einheiten umfasst, wobei die zweiten statistischen Einheiten dieser Menge Koordinaten von N-Tupels zur Identifikation besitzen wie die beiden Koordinaten, die den Zeilen- und Spaltenfeldern entsprechen, die identisch sind.

4. Verfahren nach einem der Ansprüche 1 bis 3, **dadurch gekennzeichnet, dass** das Verfahren einen Schritt des Initialimports von Daten verschiedener Formate umfasst, um die erste Tabelle herkömmlicher Daten in einer vorgegebenen Form zu erstellen.

5. Verfahren nach Anspruch 4, **dadurch gekennzeichnet, dass** die erste Tabelle, die sich aus dem Importschritt ergibt, eine unbearbeitete erste Tabelle ist, und dass das Verfahren einen Filterschritt umfasst, der darin besteht, den Inhalt der unbearbeiteten ersten Tabelle zu filtern, um die erste Tabelle herkömmlicher Daten (T1) zu erhalten.

6. Verfahren nach einem der Ansprüche 1 bis 5, **dadurch gekennzeichnet, dass** es einen Schritt umfasst, der darin besteht, dass man einem Anwender eine Oberfläche zur Bereichsbearbeitung zur Verfügung stellt, die es erlaubt, den möglichen Datenbereich in einem ersten Feld so zu definieren, dass man die Werte berechnet, um auf grafische Weise die komplexen Werte des Nichtklassifikationsfeldes, das von dem ersten Feld abgeleitet ist, darstellen zu können.

7. Verfahren nach einem der Ansprüche 1 bis 6, **dadurch gekennzeichnet, dass** es einen Schritt umfasst, der darin besteht, dass man einem Anwender eine Oberfläche zur Steuerung der Bildungsregel zur Verfügung stellt, die es erlaubt, die mit dem Nichtklassifikationsfeld assoziierte Bildungsregel bei dem Bildungsschritt zu steuern.

8. Datenverarbeitungsvorrichtung, welche mittels eines Computerprogramms zur Datenverarbeitung programmiert ist und zur Ausführung der Anweisungen geeignet ist, wobei dieses Computerprogramm zur Datenverarbeitung ausführbare Anweisungen enthält, um die Gesamtheit der Schritte nach einem der Ansprüche 1 bis 7 durchzuführen, umfassend:
- einen Computer (3) mit Zugriff auf die Daten in Form einer ersten Tabelle ' herkömmlicher Daten (T1), die eine Vielzahl von ersten Feldern (j) und eine Vielzahl von ersten statistischen Einheiten (i) enthält,
- ein Mittel zur Auswahl von Feldern, das zur Auswahl von Feldern unter der Vielzahl der ersten Felder als Klassifikationsfelder und zur Auswahl von mindestens einem Feld unter der Vielzahl der ersten Felder, die nicht als Klassifikationsfelder ausgewählt wurden, als Nichtklassifikationsfeld geeignet ist;
- ein Mittel zur Erstellung einer zweiten Tabelle komplexer Daten, umfassend eine Vielzahl zweiter Felder, die aus einer Vielzahl der Klassifikationsfelder und mindestens einem Nichtklassifikationsfeld besteht, sowie eine Vielzahl zweiter statistischer Einheiten, die jeweils durch ein N-Tupel zur Identifikation identifiziert werden, dessen jede Koordinate einem möglichen Wert eines Klassifikationsfeldes entspricht;
- ein Mittel zur Bestimmung der zweiten statistischen Einheiten, das zur Bestimmung der N-Tupels zur Identifikation ausgehend von möglichen Werten der als Klassifikationsfelder ausgewählten ersten Felder geeignet ist; und
- ein Mittel zur Bildung, das dazu geeignet ist, einen komplexen Wert aus einer zweiten statistischen Einheit gemäß dem Nichtklassifikationsfeld zu berechnen, ausgehend von einer Menge herkömmlicher Daten gemäß dem ersten Feld, von dem das Nichtklassifikationsfeld abgeleitet ist, wobei die ersten statistischen Daten der Menge Werte gemäß den ersten Feldern besitzen, von denen die Klassifikationsfelder abgeleitet sind, die mit den Koordinaten des N-Tupels zur Identifikation der zweiten statistischen Einheit zusammenfallen,
**dadurch gekennzeichnet, dass** sie ein Mittel zur Auswahl umfasst, das dazu geeignet ist, zwei Klassifikationsfelder unter der Vielzahl von Klassifikationsfeldern als Zeilenfeld und Spaltenfeld auszuwählen, und ein Feld unter den zweiten Feldern, die nicht zur Darstellung aus der zweiten Tabelle ausgewählt wurden, auszuwählen, sowie ein Mittel zur Erzeugung einer Kreuzwerttabelle, das dazu geeignet ist, eine Kreuzwerttabelle zu erzeugen, deren Zeilen den möglichen Werten des Zeilenfeldes, und deren Spalten den möglichen Werten des Spaltenfeldes entsprechen, und deren Zellen die komplexen Werte des zur Darstellung ausgewählten Felds enthalten.

9. Programmierte Datenverarbeitungsvorrichtung nach Anspruch 8, **dadurch gekennzeichnet, dass** sie ein Visualisierungsmodul umfasst, das dazu geeignet ist, die komplexen Werte auf grafische Weise darzustellen.

10. Programmierte Datenverarbeitungsvorrichtung nach Anspruch 8 oder 9, **dadurch gekennzeichnet, dass** sie ein Mittel zum Datenimport umfasst, das dazu geeignet ist, die erste Tabelle herkömmlicher Daten in einer vorgegebenen Form zu erstellen.

11. Programmierte Datenverarbeitungsvorrichtung nach Anspruch 10, **dadurch gekennzeichnet, dass** sie ein Filtermittel umfasst, das es erlaubt, den Inhalt der durch das Mittel zum Import gebildeten ersten Tabelle, als unbearbeitete erste Tabelle bezeichnet, zu filtrieren, um die erste Tabelle herkömmlicher Daten zu erhalten.

12. Programmierte Datenverarbeitungsvorrichtung nach einem der Ansprüche 8 bis 11, **dadurch gekennzeichnet, dass** sie ein Mittel zur Bereichsbearbeitung umfasst, das es erlaubt, den möglichen Datenbereich der möglichen Werte in einem ersten Feld so zu definieren, dass man die Werte berechnet, um auf grafische Weise die komplexen Werte des Nichtklassifikationsfeldes, von dem ersten Feld abgeleitet, darstellen zu können.

13. Programmierte Datenverarbeitungsvorrichtung nach einem der Ansprüche 8 bis 12, **dadurch gekennzeichnet, dass** sie ein Auswahlmittel für eine Bildungsregel umfasst, das es erlaubt, die mit dem Nichtklassifikationsfeld assoziierte Bildungsregel bei dem Bildungsschritt zu steuern.
